# EUROPEAN PATENT APPLICATION

(11) **EP 4 365 335 A1**
(43) Date of publication of application: **08.05.2024**
(21) Application number: 22205226.8
(22) Date of filing: 03.11.2022
(51) Int. Cl.: C25B 1/04, B01D 67/00, B01D 69/00, C25B 9/73, C25B 13/05

(54) **A SEPARATOR FOR ALKALINE WATER ELECTROLYSIS**

(71) Applicant: AGFA-GEVAERT NV, 2640 Mortsel (BE)
(72) Inventor: VERWAEST, Hanne, 2640 Mortsel (BE); TURNER, Stuart, 2640 Mortsel (BE)
(74) Representative: Viaene, Kris

(57) **Abstract**

A separator for alkaline hydrolysis comprising a porous layer, the porous layer comprising inorganic particles, characterized in that the inorganic particles have a fraction of primary particles having a diameter above 100 nm of lower than 3 % by number, as measured by Transmission Electron Microscopy (TEM).

## Description

### Technical field of the invention

The present invention relates to a separator for alkaline water electrolysis.

### Background art for the invention

Nowadays, hydrogen is used in several industrial processes, for example its use as raw material in the chemical industry and as a reducing agent in the metallurgic industry. Hydrogen is a fundamental building block for the manufacture of ammonia, and hence fertilizers, and of methanol, used in the manufacture of many polymers. Refineries, where hydrogen is used for the processing of intermediate oil products, are another area of use. However, the production of hydrogen from fossil fuels results in massive CO₂ emission.

Hydrogen is also being considered an important future energy carrier, which means it can store and deliver energy in a usable form. Energy is released by an exothermic combustion reaction with oxygen thereby forming water. During such combustion reaction no greenhouse gases containing carbon are emitted.

For the realization of a low-carbon society, renewable energies using natural energy such as solar light and wind power are becoming more and more important.

The production of electricity from wind power and solar power generation systems is very much dependent on the weather conditions and therefore variable, leading to an imbalance of demand and supply of electricity. To store surplus electricity, the so-called power-to-gas technology, wherein electrical power is used to produce gaseous fuel such as hydrogen, has attracted much interest in recent years. As production of electricity from renewable energy sources will increase, the demand for storage and transportation of the produced energy will also increase.

Water electrolysis is an important manufacturing process wherein renewable electricity may be converted into hydrogen. Hydrogen produced in this way is often referred to as green hydrogen, emphasizing that no greenhouse gases are formed during its production. Ammonia and steel prepared from or with green hydrogen are also referred to as green ammonia and green steel.

In an alkaline water electrolysis cell, a so-called separator or diaphragm is used to separate electrodes of different polarity to prevent a short circuit between these electrodes and to prevent the recombination of hydrogen (formed at the cathode) and oxygen (formed at the anode) by avoiding gas crossover. In addition, the separator should exhibit a high ionic conductivity for the transportation of hydroxyl ions from the cathode to the anode.

A separator for alkaline water electrolysis, for example disclosed in EP-A 1776490 (VITO), WO2009/147084 and WO2009/147086 (Agfa Gevaert NV and VITO), typically comprises a porous polymer layer provided on an porous support. Inorganic particles, such as zirconiumoxide, are added to the polymer layer to render it hydrophilic, ensuring sufficient electrolyte permeability and minimal adhesion of gas bubbles on the surface of the polymer layer.

It has been observed that the particle size of the inorganic particles may influence the properties of the separator prepared with them. Preferred d50 particle sizes, measured using laser diffraction, are 0.4 µm or less for zirconiumoxide particles (EP-A 3933069, Agfa Gevaert NV), 0.5 µm or less for magnesium hydroxide particles (EP-A 3660188, Nippon Shokubai) and 0.3 µm or less for bariumsulfate particles (EP-A 3994295, Agfa Gevaert NV).

However, it has now been observed that separators prepared with inorganic particles batches having similar d50 particles sizes measured with laser diffraction may nevertheless have different properties, for example different gas permeation properties.

### Summary of the invention

It is an object of the invention to provide a separator for alkaline water electrolysis having optimal gas separation properties.

This object is realized with the separator as defined in claim 1.

Further objects of the invention will become apparent from the description hereinafter.

### Brief description of the drawings

**Figure 1** shows schematically an embodiment of a separator according to the present invention.
**Figure 2** shows schematically an embodiment of a separator according to the present invention.
**Figure 3** shows schematically an embodiment of a separator according to the present invention
**Figure 4** shows schematically an embodiment of a manufacturing method of a separator as shown in Figure 2.
**Figure 5** shows schematically another embodiment of a manufacturing method of a separator as shown in Figure 2.
**Figure 6** shows the frequency histograms measured with TEM of zirconium oxide particles used in the examples.

### Detailed description of the invention

### Separator

The separator is also referred to as diaphragm or membrane.

The separator for alkaline water electrolysis according to the present invention comprises a porous layer, the porous layer comprising inorganic particles as described below.

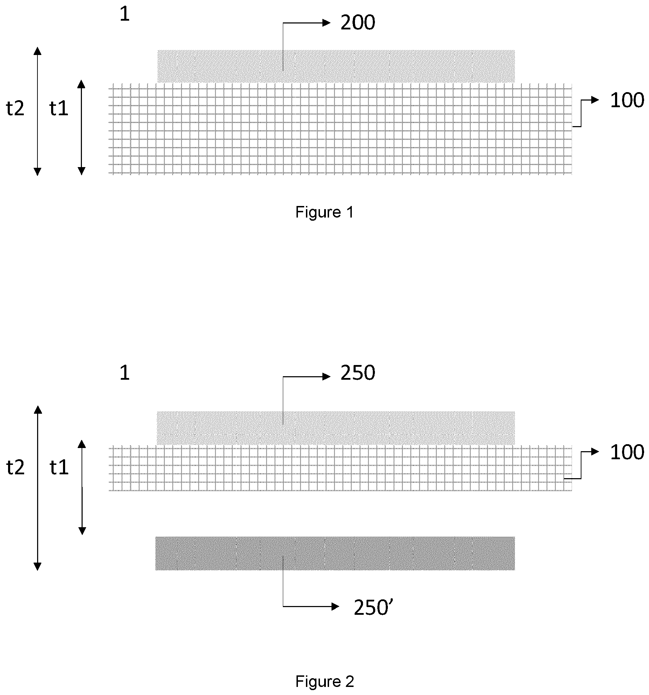

A preferred separator (1) is schematically depicted in Figure 1 wherein the porous layer (200) is provided on a side of a porous support (100).

Figure 2 schematically depicts another preferred separator (1) wherein a first (250) and a second (250') porous layer are provided on respectively one side and the other side of a porous support (100). The first (250) and second (250') porous layers may be identical or different from each other. The porous layers are preferably provided on the support as described below.

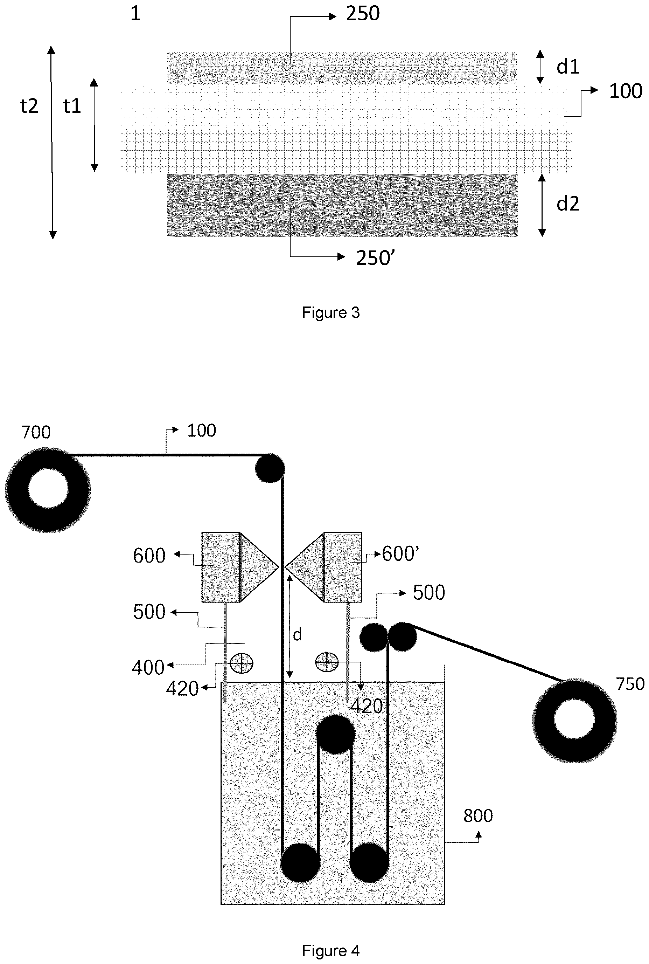

Figure 3 schematically depicts yet another preferred separator (1) wherein a first (250) and second (250') porous layer are provided on respectively one side and the other side of the porous support (100), wherein the first porous layer has an overlay thickness (d1) smaller than the overlay thickness of the second porous layer (d2).

The overlay of a porous layer is defined as the part of the porous layer that is not impregnated in the porous support.

The ratio of the overlay thicknesses d1/d2 is preferably less than 0.8, more preferably less than 0.6, most preferably less than 0.4. The overlay thickness of the first porous layer (d1) is preferably at least 20 µm, preferably at least 30 µm, more preferably at least 35 µm, most preferably at least 40 µm.

It has been observed that waviness of the separator could be improved when the overlay thicknesses d1 and d2 are different from each other. When the overlay thickness of the first porous layer is less than 20 µm, it is possible that fibres from the porous support will protrude the overlay of the porous layer, resulting in a too high gas permeability.

The thickness of the separator (t2) is preferably from 25 to 750 µm, more preferably from 50 to 500 µm, most preferably from 75 to 250 µm, particularly preferred from 100 to 200 µm. Increasing the thickness of the separator typically results in a higher physical strength of the separator. However, increasing the thickness of the separator may also result in a decrease of the electrolysis efficiency due to an increase of the ionic resistance.

The gas permeability of the membrane is preferably between 1 and 7 L/min.cm², more preferably between 1.5 and 6.5 L/min.cm², most preferably between 2 and 5.5 L/min.cm². The gas permeability may be measured with a Porolux^{™} 1000 apparatus at 5 bar. A too high gas permeability may result in a too high flow of electrolyte, which could bring dissolved gas to the wrong side of the electrolyser, resulting in an increase of the HTO (vol% hydrogen present in the oxygen formed at the anode) or OTH (vol% oxygen present in the hydrogen formed at the cathode).

The separator preferably has an ionic resistance of less than 0.15 ohm.cm², more preferably less than 0.1 ohm.cm², most preferably less than 0.07 ohm.cm² at 80°C in a 30 wt% aqueous KOH solution. The ionic resistance may be determined with an Inolab^{®} Multi 9310 IDS apparatus available from VWR, part of Avantor, equipped with a TetraCon 925 conductivity cell available from Xylem.

As described below in more detail a separator according to the present invention is preferably prepared by the application of a coating solution, also referred to herein as a dope solution, on one or both sides of a porous support.

The dope solution preferably comprises a polymer, ZrO₂ particles and a solvent, all described in more detail below.

A porous layer is then obtained after a phase inversion step wherein the polymer forms a three-dimensional porous polymer network.

Upon application of the dope solution(s) on one or both sides of the porous support, the dope solution(s) preferably impregnate the porous support. The porous support is more preferably completely impregnated with the dope solution(s). Such impregnation of the dope solution(s) into the porous support ensures that after phase inversion the three-dimensional porous polymer network also extends into the porous support, resulting in an improved adhesion between the porous layer and the porous support.

The separator includes pores having a pore diameter that is sufficiently small to prevent gas crossover. On the other hand, to ensure efficient transportation of hydroxyl ions from the cathode to the anode, larger pore diameters are preferred. An efficient transportation of the hydroxyl ions requires an efficient penetration of electrolyte into the separator.

The pores are preferably characterized using the Bubble Point Test method described in American Society for Testing and Materials Standard (ASMT) Method F316. This technique is based on the displacement of a wetting liquid embedded in the separator by applying an inert pressurised gas. Only through-pores are measured in this way. The most challenging part for the gas to displace the liquid along the entire pore path is the most constricted section of the pore, also known as pore throat. The diameter of a pore measured with the Bubble Point Test method is the diameter of that pore throat, regardless of where the pore throat is positioned in the pore path. The pore diameters referred to herein are all measured using the Bubble Test method described above.

The maximum pore diameter (PDmax) of the separator is preferably from 0.05 to 2 µm, more preferably from 0.10 to 1 µm, most preferably from 0.2 to 0.6 µm. The average pore diameter of the separator is preferably from 0.01 to 1 µm, more preferably from 0.02 to 0.5 µm, most preferably from 0.05 to 0.25 µm.

The Bubble Point Test method may be adapted to measure a maximum pore diameter (PDmax) on both sides of a separator by using a grid supporting one side of the separator during the measurement. Another measurement is then carried out using the grid supporting the other side of the separator. Both sides of the separator may have identical or different maximum pore diameters.

Preferred separators have a maximum pore diameter PDmax(1) on one side and a maximum pore diameter PDmax(2) on the other side wherein both PDmax(1) and PDmax(2) are from 0.05 to 2 µm, more preferred from 0.10 to 1 µm, most preferred from 0.2 to 0.6 µm and wherein the ratio PDmax(1)/PDmax(2) is from 0.9 to 1.1, more preferred from 0.95 to 1.05.

However, the separator may also have maximum pore diameters PDmax(1) and PDmax(2) that are substantially different from each other, for example to avoid trapping of gas bubbles inside the separator. For example a separator having on one side a maximum pore diameter PDmax(1) from 0.05 to 0.45 µm, more preferably from 0.1 to 0.4 µm, most preferably from 0.15 to 0.35 µm and on the other side a maximum pore diameter PDmax(2) from 0.2 to 6.5 µm, more preferably from 0.25 to1.50 µm, most preferably from 0.3 to 0.6 µm.

The ratio between PDmax(2) and PDmax(1) is preferably from 1.1 to 20, more preferably from 1.25 to 10, most preferably from 2 to 7.5. The smaller PDmax(1) ensure an efficient separation of hydrogen and oxygen while PDmax(2) ensures a good penetration of the electrolyte in the separator resulting in a sufficient ionic conductivity.

The porosity of the separator is preferably between 30 and 80 %, more preferably between 50 and 70 %. A separator having a porosity within the above ranges typically has excellent ion permeability and excellent gas barrier properties because the pores of the diaphragm are continuously filled with an electrolyte solution.

The separator preferably has a water permeability from 200 to 800 l/bar.h.m², more preferably from 300 to 600 l/bar.h.m²

### Porous support

The porous support may be used to reinforce the separator to ensure its mechanical strength.

A thickness of the porous support (t1) is preferably 350 µm or less, more preferably 200 µm or less, most preferably 100 µm or less, particularly preferred 75 µm or less.

It has been observed that the ion conductivity through a reinforced separator increases when the thickness of the porous support decreases.

However, to ensure sufficient mechanical properties of the reinforced separator, the thickness of the porous support is preferably 20 µm or more, more preferably 40 µm or more.

The porous support may be selected from the group consisting of a porous fabric and a porous ceramic plate.

The porous support is preferably a non-woven fabric, a woven fabric, a mesh or a felt, more preferably a non-woven or woven fabric.

Woven fabrics typically have a better dimensional stability and homogeneity of open area and thickness. However, the manufacture of woven fabrics with a thickness of 100 µm or less is more complex resulting in more expensive fabrics. The manufacture of non-woven fabrics is less complex, even for fabrics having a thickness of 100 µm or less. Also, non-woven fabrics may have a larger open area.

The open area of the porous support is preferably from 30 to 80%, more preferably from 40 to 70 %, to ensure a good penetration of the electrolyte into the support.

The fabric preferably has a fibre diameter from 10 µm to 200 µm, more preferably from 20 µm to 150 µm, most preferably from 30 µm to 100 µm. Fabrics having a lower thickness t1 preferably have a smaller fibre diameter. For example a fabric having a thickness t1 of 150 µm or lower preferably contains fibres having a fibre diameter of 75 µm or lower, more preferably of 50 µm or lower, most preferably of 35 µm or lower.

To further reduce the thickness t1 of the fabric, the ratio of the gauze thickness to the fibre diameter is preferably less than 2.0, more preferably 1.7 or less, most preferably 1.4 or less. A thinner fabric makes it possible to prepare thinner separators.

The porous support preferably includes a polymer such as for example polypropylene, polyethylene, polysulfone, polyphenylene sulfide, polyamide/nylon, polyether sulfone, polyphenyl sulfone, polyethylene terephthalate, polyether ether ketone, sulfonated polyether ether keton, monochlorotrifluoroethylene, copolymers of ethylene with tetrafluorethylene or chlorotrifluoroethylene, polyimide, polyether imide and m-aramide.

A preferred porous support includes polyphenylene sulphide (PPS) or polyether ether ketone (PEEK).

A PPS or PEEK based porous support has a high resistance to high-temperature, high concentration alkaline solutions and a high chemical stability against active oxygen evolved from an anode during the water electrolysis process. Also, PPS and PEEK can be easily processed into various forms such as a woven fabric or a non-woven fabric.

The density of the porous support is preferably between 0.1 to 0.7 g/cm³.

The porous support is preferably a continuous web to enable a manufacturing process as disclosed in EP-A 1776490 and WO2009/147084.

The width of the web is preferably between 30 and 300 cm, more preferably between 40 and 200 cm.

### Polymer

The porous layer preferably comprises a polymer.

The polymer forms a three dimensional porous network, the result of a phase inversion step in the preparation of the separator, as described below.

The polymer may be selected from a fluorine resin such as polyvinylidene fluoride (PVDF) and polytetrafluoroethylene (PTFE), an olefin such as polypropylene (PP), and an aromatic hydrocarbon resin such as polyethylene terephthalate (PET) and polystyrene (PS). The polymer may be used alone, or two or more of the polymer resins may be used in combination.

PVDF and vinylidenefluoride (VDF)-copolymers are preferred for their oxidation/reduction resistance and film-forming properties. Among these, terpolymers of VDF, hexanefluoropropylene (HFP) and chlorotrifluoroethylene (CTFE) are preferred for their excellent swelling properties, heat resistance and adhesion to electrodes.

Another preferred polymer is an aromatic hydrocarbon for their excellent heat and alkali resistance. Examples include polyethylene terephthalate, polybutylene terephthalate, polybutylene naphthalate, polystyrene, polysulfone, polyethersulfone, polyphenylene sulphide and polyphenyl sulfone.

Other polymers that may be used are polyacrylate, polyetherimide, polyimide, and polyamide-imide.

A particular preferred polymer is selected from the group consisting of polysulfone, polyethersulfone, polyphenylene sulfide, polyether ether ketone and polyphenylsulfone, polysulfone being the most preferred.

The porous layer may comprise two, three or more different polymers as described above.

The molecular weight (Mw) of the polymer is preferably between 10 000 and 500 000, more preferably between 25 000 and 250 000. When the Mw is too low, the physical strength and durability of the porous layer may become insufficient. When the Mw is too high, the viscosity of the dope solution may become too high.

Examples of polysulfones, polyether sulfones and combinations thereof are disclosed in EP-A 3085815, paragraphs [0021] to [0032].

The amount of polymer is preferably from 5 to 40 wt%, more preferably from 10 to 30 wt%, most preferably from 15 to 25 wt%, all relative to the total dry weight of the porous layer.

### Inorganic particles

The porous layer comprises inorganic particles, characterized in that the inorganic particles have a fraction of primary particles having a diameter above 100 nm that is lower than 3 % by number, preferably lower than 2 % by number, more preferably lower than 1 % by number.

The fraction of primary particles having a diameter above 100 nm referred to above may be determined by Transmission Electron Microscopy as described below in the Examples.

The inorganic particles preferably have a d50 particle size measured by a Differential Sedimentation Method, for example using a CPS Disc Centrifuge particle size analyser, from 0.01 to 1 µm, more preferably from 0.05 to 0.5 µm, most preferably from 0.075 to 0.3 µm.

The d50 particle size is also known as the median diameter or the medium value of the particle size distribution. It is the value of the particle diameter at 50% in the cumulative distribution. For example, if d50 = 1.0 µm, then 50% of the particles are larger than 1.0 µm and 50% are smaller than 1.0 µm.

The inorganic particles render the porous layer hydrophilic. The hydrophilic nature of the porous layer prevents the adhesion of hydrogen and oxygen bubbles. Such adhesion of gas bubbles would reduce the electrolysis efficiency.

Preferred inorganic particles are selected from metal oxides and metal hydroxides.

Preferred metal oxides are selected from the group consisting of zirconium oxide, titanium oxide, bismuth oxide, cerium oxide and magnesium oxide, zirconium oxide being the most preferred.

Preferred metal hydroxides are selected from the group consisting of zirconium hydroxide, titanium hydroxide, bismuth hydroxide, cerium hydroxide and magnesium hydroxide. A particularly preferred magnesium hydroxide is disclosed in EP-A 3660188, paragraphs [0040] to [0063].

Other preferred inorganic particles are sulfates of calcium, barium, lead or strontium, barium sulfate particles being more preferred.

Still other inorganic particles that may be used are nitrides and carbides of Group IV elements of the periodic table.

A particular preferred zirconium oxide has a particle size of 70 nm or less, more preferably less than 65 nm, most preferably less than 60 nm, measured using the Debye-Scherrer equation on the (-111) reflection of a powder X-ray diffraction pattern of the zirconium oxide particles.

A combination of one or more different inorganic particles may be used.

The inorganic particles may be natural substances or synthetic substances.

The surface of the inorganic particles may be untreated or may be surface-treated with for example a silane coupling agent, stearic acid, oleic acid, or a phosphoric acid ester.

The shape of the inorganic particles is not particularly limited as long as it is in the form of particles and may be any of irregular shapes, spherical shapes such as true spherical shapes and oblong spherical shapes, plate shapes such as flake shapes and hexagonal plate shapes, and fibrous shapes.

The total amount of inorganic particles is preferably from 30 to 95 wt%, more preferably from 50 to 92 wt%, most preferably from 60 to 90 wt%, all relative to the total dry weight of the porous layer. The amount of inorganic particles is preferably at least 65 wt%, more preferably at least 75 wt%, all relative to the total dry weight of the porous layer.

The weight ratio of inorganic particles to polymer resin is preferably 60/40 or more, more preferably 70/30 or more, most preferably 75/25 or more.

### Preparation of the separator

A preferred preparation method of a separator according to the present invention comprises the steps of:
- applying a dope solution as described below on one or both sides of a porous support (100);
- performing phase inversion on the applied dope solution thereby forming a separator (1) comprising a porous layer (200) on the support.

The applied dope solution preferably completely impregnates the porous support before performing the phase inversion.

A preferred method of manufacturing a reinforced separator is disclosed in EP-A 1776490 and WO2009/147084 for separators having on both sides substantially identical pore diameters and EP-A 3652362 for separators having on both sides different pore diameters. These methods result in web-reinforced separators wherein the web, i.e. the porous support, is nicely embedded in the separator, without appearance of the web at a surface of the separator.

Other manufacturing methods that may be used are disclosed in EP-A 3272908, EP-A 3660188 and EP-A 3312306.

### Dope solution

The dope solution preferably comprises a polymer as described above, inorganic particles as described above and a solvent.

The solvent of the dope solution is preferably an organic solvent wherein the polymer resin can be dissolved. Moreover, the organic solvent is preferably miscible in water.

The solvent is preferably selected from N-methyl-pyrrolidone (NMP), N-ethyl-pyrrolidone (NEP), N-butyl-pyrrolidone (NBP), N,N-dimethylformamide (DMF), formamide, dimethylsulfoxide (DMSO), N,N-dimethylacetamide (DMAC), acetonitrile, and mixtures thereof.

A highly preferred solvent, for health and safety reasons, is N-butyl-pyrrolidone (NBP).

The dope solution may further comprise other ingredients to optimize the properties of the obtained polymer layers, for example their porosity and the maximum pore diameter at their outer surface.

The dope solution preferably comprises an additive to optimize the pore size at the surface and inside of the porous layer. Such additives may be organic or inorganic compounds, or a combination thereof.

Organic compounds which may influence the pore formation in the porous layers include polyethylene glycol, polyethylene oxide, polypropylene glycol, ethylene glycol, tripropylene glycol, glycerol, polyhydric alcohols, dibutyl phthalate (DBP), diethyl phthalate (DEP), diundecyl phthalate (DUP), isononanoic acid or neodecanoic acid, polyvinylpyrrolidone, polyvinyl-alcohol, polyvinylacetate, polyethyleneimine, polyacrylic acid, methylcellulose and dextran.

Preferred organic compounds which may influence the pore formation in the porous layers are selected from polyethylene glycol, polyethylene oxide and polyvinyl pyrrolidone.

A preferred polyethylene glycol has a molecular weight of from 10 000 to 50 000, a preferred polyethylene oxide has a molecular weight of from 50 000 to 300 000, and a preferred polyvinylpyrrolidone has a molecular weight of from 30 000 to 1 000 000.

A particularly preferred organic compound which may influence the pore formation in the porous layers is glycerol.

The amount of compounds which may influence the pore formation is preferably between 0.1 and 15 wt%, more preferably between 0.5 and 5 wt% relative to the total weight of the dope solution.

Inorganic compounds which may influence the pore formation include calcium chloride, magnesium chloride, lithium chloride and barium sulfate.

A combination of two or more additives that influence the pore formation may be used.

The dope solutions provided on either side of the porous support may be the same or different.

### Applying the dope solution

The dope solution may be applied on the surface of a substrate, preferably a porous support, by any coating or casting technique.

A preferred coating technique is extrusion coating.

In a highly preferred embodiment, the dope solutions are applied by a slot die coating technique wherein two slot coating dies (Figures 4 and 5, 600 and 600') are located on either side of a porous support.

The slot coating dies are capable of holding the dope solution at a predetermined temperature, distributing the dope solutions uniformly over the support, and adjusting the coating thickness of the applied dope solutions.

The viscosity of the dope solutions measured at a shear rate of 100 s⁻¹ and a temperature of 20 °C is at least 7.5 Pa.s, more preferably at least 15 Pa.s, most preferably at least 30 Pa.s.

The dope solutions are preferably shear-thinning. The ratio of the viscosity at a shear rate of 1 s⁻¹ to the viscosity at a shear rate of 100 s⁻¹ is preferably at least 2, more preferably at least 2.5, most preferably at least 5.

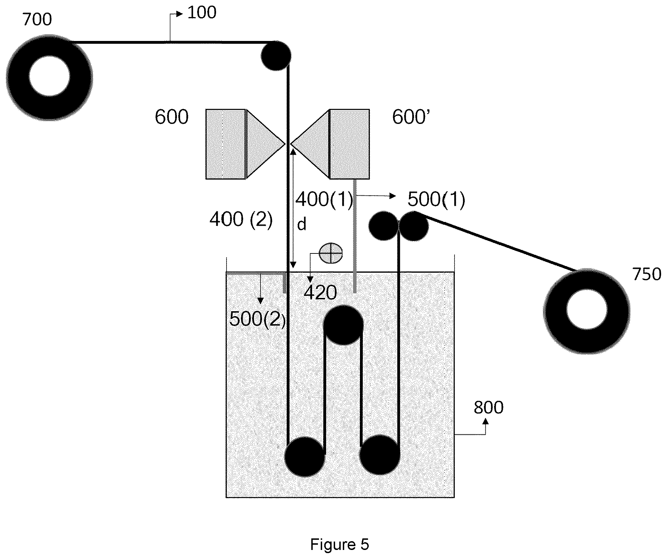

The porous support is preferably a continuous web, which is transported downwards between the slot coating dies (600, 600') as shown in Figures 4 and 5.

Immediately after the application, the porous support becomes impregnated with the dope solutions.

Preferably, the porous support becomes fully impregnated with the applied dope solutions.

### Phase inversion step

After applying the dope solution onto a porous support, the applied dope solution is subjected to phase inversion. In the phase inversion step, the applied dope solution is transformed into a porous layer.

In a preferred embodiment, both dope solutions applied on a porous support are subjected to phase inversion.

Any phase inversion mechanism may be used to prepare the porous hydrophilic layers from the applied dope solutions.

The phase inversion step preferably includes a so-called Liquid Induced Phase Separation (LIPS) step, a Vapour Induced Phase Separation (VIPS) step or a combination of a VIPS and a LIPS step. The phase inversion step preferably includes both a VIPS and a LIPS step.

Both LIPS and VIPS are non-solvent induced phase-inversion processes.

In a LIPS step the porous support provided with the dope solution(s) is contacted with a non-solvent that is miscible with the solvent of the dope solution.

Typically, this is carried out by immersing the porous support provided with the dope solution(s) into a non-solvent bath, also referred to as coagulation bath.

The non-solvent is preferably water; mixtures of water and an aprotic solvent selected from the group consisting of N-methylpyrrolidone (NMP), N-ethyl-pyrrolidone (NEP), N-butylpyrrolidone (NBP), dimethylformamide (DMF), dimethylsulfoxide (DMSO) and dimethylacetamide (DMAC); water solutions of water-soluble polymers such as PVP or PVA; or mixtures of water and alcohols, such as ethanol, propanol or isopropanol.

The non-solvent is most preferably water.

The temperature of the coagulation bath is preferably between 20 and 90°C, more preferably between 40 and 70°C.

The transfer of solvent from the coated polymer layer towards the non-solvent bath and of non-solvent into the polymer layer leads to phase inversion and the formation of a three-dimensional porous polymer network. The impregnation of the applied dope solution into the porous support results in a sufficient adhesion of the obtained hydrophilic layers onto the porous support.

In a preferred embodiment, the continuous web (100) coated on either side with a dope solution is transported downwards, in a vertical position, towards the coagulation bath (800) as shown in Figures 4 and 5.

In a VIPS step, the porous support coated with the dope solutions is exposed to non-solvent vapour, preferably humid air.

Preferably, the coagulation step included both a VIPS and a LIPS step. Preferably the VIPS step is carried out before the LIPS step. In a particular preferred embodiment, the porous support coated with the dope solutions is first exposed to humid air (VIPS step) prior to immersion in a water bath (LIPS step).

In the manufacturing method shown in Figure 4, VIPS is carried out in the area 400, between the slot coating dies (600, 600') and the surface of the non-solvent in the coagulation bath (800), which is shielded from the environment with for example thermal isolated metal plates (500).

The extent and rate of water transfer in the VIPS step can be controlled by adjusting the velocity of the air, the relative humidity and temperature of the air, as well as the exposure time.

The exposure time may be adjusted by changing the distance d between the slot coating dies (600, 600') and the surface of the non-solvent in the coagulation bath (800) and/or the speed with which the elongated web (100) is transported from the slot coating dies towards the coagulation bath.

The relative humidity in the VIPS area (400) may be adjusted by the temperature of the coagulation bath and the shielding of the VIPS area (400) from the environment and from the coagulation bath.

The speed of the air may be adjusted by the rotating speed of the ventilators (420) in the VIPS area (400).

The VIPS step carried out on one side of the separator and on the other side of the separator, resulting in the second porous polymer layer, may be identical (Figure 4) or different (Figure 5) from each other.

After the phase inversion step, preferably the LIPS step in the coagulation bath, a washing step may be carried out.

After the phase inversion step, or the optional washing step, a drying step may be carried out.

### Manufacturing of the separator

Figures 4 and 5 schematically illustrate a preferred embodiment to manufacture a separator according to the present invention.

The porous support is preferably a continuous web (100).

The web is unwound from a feed roller (700) and guided downwards in a vertical position between two coating units (600) and (600').

With these coating units, a dope solution is coated on either side of the web. The coating thickness on either side of the web may be adjusted by optimizing the viscosity of the dope solutions and the distance between the coating units and the surface of the web. Preferred coating units are described in EP-A 2296825, paragraphs [0043], [0047], [0048], [0060], [0063], and Figure 1 of EP-A 2296825.

The web coated on both sides with a dope solution is then transported over a distance d downwards towards a coagulation bath (800).

In the coagulation bath, the LIPS step is carried out.

The VIPS step is carried out before entering the coagulation bath in the VIPS areas. In Figure 4, the VIPS area (400) is identical on both sides of the coated web, while in Figure 5, the VIPS areas (400(1)) and (400(2)) on either side of the coated web are different.

The relative humidity (RH) and the air temperature in de VIPS area may be optimized using thermally isolated metal plates. In Figure 4, the VIPS area (400) is completely shielded from the environment with such metal plates (500). The RH and temperature of the air is then mainly determined by the temperature of the coagulation bath. The air speed in the VIPS area may be adjusted by a ventilator (420).

A high RH and/or a high air speed in a VIPS area typically result in a larger maximum pore diameter.

The RH in the VIPS area (400) is preferably above 85%, more preferably above 90%, most preferably above 95%.

In Figure 5 the VIPS areas (400(1)) and (400(2)) are different from each other. The VIPS area (400(1)) on one side of the coated web including a metal plate (500(1)) is identical to the VIPS area (400) in Figure 4. The VIPS area (400(2)) on the other side of the coated web is different from the area (400(1)). There is no metal plate shielding the VIPS area (400(2)) from the environment. However, the VIPS area (400(2)) is now shielded from the coagulation bath by a thermally isolated metal plate (500(2)). In addition, there is no ventilator present in the VIPS area 400(2). This results in a VIPS area (400(1)) having a higher RH and air temperature compared to the RH and air temperature of the other VIPS area (400(2)).

The RH in one VIPS area is preferably above 85%, more preferably above 90%, most preferably above 95% while the RH in another VIPS area is preferably below 80%, more preferably below 75%, most preferably below 70%.

A washing step may be carried out after the phase separation step.

After the phase separation step or the washing step, the reinforced separator is then transported to a rolling up system (750).

A liner may be provided on one side of the separator before rolling up the separator and the applied liner.

### Electrolytic cell

The separator for alkaline water electrolysis according to the present invention may be used in an alkaline water electrolyser.

An electrolysis cell typically consists of two electrodes, an anode and a cathode, separated by a separator. An electrolyte is present between both electrodes.

When electrical current is supplied to the electrolysis cell, hydroxyl ions of the electrolyte are oxidized into oxygen at the anode and water is reduced to hydrogen at the cathode. The hydroxyl ions formed at the cathode migrate through the separator to the anode. The separator prevents mixing of the hydrogen and oxygen gases formed during electrolysis.

An electrolyte solution is typically an alkaline solution. Preferred electrolyte solutions are aqueous solutions of electrolytes selected from sodium hydroxide or potassium hydroxide. Potassium hydroxide electrolytes are often preferred due to their higher specific conductivity. The concentration of the electrolyte in the electrolyte solution is preferably from 20 to 40 wt%, relative to the total weight of the electrolyte solution.

The temperature of the electrolyte is preferably from 50°C to 120°C, more preferably from 75°C to 100°C, most preferably from 80 to 90 °C. However, a higher temperature, for example at least 100°C, more preferably from 125 to 165°C may result in a more efficient electrolysis.

An electrode typically include a substrate provided with a so-called catalyst layer. The catalyst layer may be different for the anode, where oxygen is formed, and the cathode, where hydrogen is formed.

Typical substrates are made from electrically conductive materials selected from the group consisting of nickel, iron, soft steels, stainless steels, vanadium, molybdenum, copper, silver, manganese, platinum group elements, graphite, and chromium. The substrates may be made from an electrically conductive alloy of two or more metals or a mixture of two or more electrically conductive materials. A preferred material is nickel or nickel-based alloys. Nickel has a good stability in strong alkaline solutions, has a good conductivity and is relatively cheap.

A catalyst layer preferably includes nickel, cobalt, iron, and platinum group elements. The catalyst layer may include these elements as elemental metals, compounds (e.g. oxides), composite oxides or alloys made of multiple metal elements, or mixtures thereof. Preferred catalyst layers include plated nickel, plated alloys of nickel and cobalt or nickel and iron, complex oxides including nickel and cobalt such as LaNiO₃, LaCoO₃, and NiCo₂O₄, compounds of platinum group elements such as iridium oxide, or carbon materials such as graphene.

A particularly preferred catalyst layer comprises Raney Nickel. The Raney nickel structure is formed by selectively leaching aluminium or zinc from a Ni-AI or Ni-Zn alloy. Lattice vacancies formed during leaching result in a large surface area and a high density of lattice defects, which are active sites for the electro-catalytic reaction to take place.

Preferred porous electrodes and methods to prepare them are disclosed in for example EP-A 3575442, paragraphs 23 to 84.

The pore size of porous electrodes may have an influence on the electrolysis efficiency. For example, in EP-A 3575442 it is disclosed that preferred pore sizes of the porous electrodes are from 10 nm up to 200 nm.

The catalyst layer may also include organic substances such as polymers to improve the durability and the adhesion towards the substrate.

In a so-called zero gap electrolytic cell the electrodes are placed directly in contact with the separator thereby reducing the space between both electrodes. Mesh-type or porous electrodes are used to enable the separator to be filled with electrolyte and for efficient removal of the oxygen and hydrogen gases formed. It has been observed such zero gap electrolytic cells operate at higher current densities.

However, in such a zero gap electrolytic cell it has been observed that gas bubbles formed inside the separator may accumulate at the top of the separator. Such accumulation of gas bubbles at the top of the separator may result in a higher ionic resistance in that part of the cell. A temperature rise as a result of a less efficient cooling by the electrolyte in that area of the electrolysis cell may even result in burning of the separator.

It has been observed that introducing a small distance between one side of the separator and at least one electrode results in less accumulation of gas bubbles inside the separator. The distance between one side of the separator and the anode and the distance between the other side of the separator and the cathode may be the same or different.

The distance between a surface of the separator and at least one electrode is preferably from 50 up to 500 µm, more preferably from 100 up to 250 µm.

A so-called spacer may be used to realize the distance between the separator and the electrode.

Such a spacer is preferably hydrophilic to avoid adhesion of gas bubbles to the spacer (static water contact angle is 90 °C or lower, preferably 45 °C or lower).

Such a spacer preferably has an open structure to ensure rapid and sufficient evacuation of gas bubbles.

A typical alkaline water electrolyser includes several electrolytic cells, also referred to stack of electrolytic cells.

Regarding the cell configuration, two types of electrolysers are typically used.

A unipolar (or "tank- type") electrolyser consists of alternate positive and negative electrodes held apart by a separator. Positive electrodes are all coupled together in parallel, as are the negative electrodes, and the whole assembly is immersed in a single electrolyte bath ("tank") to form a unit cell. A plant-scale electrolyser is then built up by connecting these units electrically in parallel. The total voltage applied to the whole electrolysis cell is the same as that applied to the individual unit cells.

On the other hand, in a bipolar electrolyser a metal sheet (or "bipole") connects electrically adjacent cells in series. The electrocatalyst for the negative electrode is coated on one face of the bipole and that for the positive electrode of the adjacent cell is coated on the reverse face. In this case, the total cell voltage is the sum of the individual unit cell voltages. Therefore, a series-connected stack of such cells forms a module that operates at a higher voltage and lower current than the tank-type (unipolar) design. To meet the requirements of a large electrolysis plant, these modules are connected in parallel so as to increase the current.

Membrane Electrode Assemblies (MEA) can also be used in an electrolyser. Such MEAs are typically prepared by applying a separator, preferably without a reinforcing support, on at least one porous electrode. Such MEAs are for example disclosed in EP-A 2831312 (Agfa Gevaert), EP3277862 (De Nora) and WO2020/158719 (Nippon Shokubai). Such MEAs may also be used in the electrolysis method according to the present invention.

The catalyst layer referred to above may also be provided on a surface of the separator, resulting in a so-called Catalyst Coated Membrane (CCM).

Such a CCM may have an improved contact surface between the membrane surface and the catalyst layer resulting in a higher electrolysis efficiency.

The catalyst layer may be applied on the membrane surface by any deposition technique such as coating, spraying, inkjet printing, gravure printing, screen printing, 3D printing, vapour deposition techniques.

### EXAMPLES

### Measurements

### Transmission Electron Microscopy (TEM)

TEM images were acquired using a Philips CM200 microscope, operated at 80kV acceleration voltage. All images were taken in bright field mode. Particle sizes were derived from the area (nm²) of the particles, as measured from the TEM images and assuming a spherical morphology using the Radius software package.

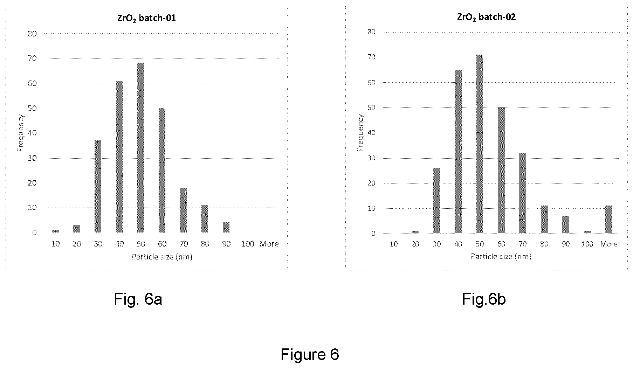

The Particle Size distribution (frequency histograms) obtained with TEM of different ZrO₂ batches are shown in Figure 6.

### d50 particle size

The d50 partice size was measured by a Differential Centrifugal Sedimentation method using a Disc Centrifuge particle size analyser CPS DC24000 from CPS Instruments Europe.

### Gas Permeability

The gas permeability was measured using a Porolux^{™} 1000 apparatus at 5 bar.

### Example 1

### Preparation of the separators S-1 and S-2

The separators S-1 and S-2 were prepared as schematically depicted in Figure 4 using a dope solution comprising 10 wt% polysulfone (PSU), 40 wt% of Zirconium oxide particles according to Table 1 and 50 wt % N-butyl pyrrolidone on a polyphenylsulfide fabric having a thickness of 300 µm.

The frequency histograms of the Zirconium oxide particles used are shown in Figure 6. The d50 particles size (d50) and the fraction of primary particles above 100 nm ([> 100 nm]) of the different Zirconium oxide batches used are shown in Table 1.

The dope solutions were coated on both sides of the polymer fabric using slot die coating technology at a speed of 1 m/min.

The coated fabric was then transported towards a water bath kept at 50 - 60°C.

A VIPS step was carried out before entering the water bath in an enclosed area.

The coated support then entered the water bath for 6 minutes during which a liquid induced phase separation (LIPS) occurred.

The thickness of the obtained separators was approximately 500 µm.

**Table 1**

| Separator | ZrO₂ batch | d50 (µm) | [> 100 nm] (% by number) | Gas permeability (L/min.cm²) |
|---|---|---|---|---|
| S-1 | batch-01 | 0.22 | 0 | 3.2 |
| S-2 | batch-02 | 0.14 | 11 | 8.8 |

It is clear from the results of Table 1 that a separator comprising zirconium oxide particles having a fraction of particles above 100 nm in diameter higher than 3 % by number (S-2) has a higher gas permeability compared to separators according to the invention (S-1), even when the d50 particle size of the zirconium oxide particles is below 0.3 µm.

## Claims

1. A separator for alkaline electrolysis comprising a porous layer, the porous layer comprising inorganic particles, **characterized in that** the inorganic particles have a fraction of primary particles having a diameter above 100 nm of lower than 3 % by number, as measured by Transmission Electron Microscopy (TEM).

2. The separator according to claim 1 wherein the inorganic particles have a d50 particle diameter D₅₀ of 0.7 µm or lower measured with a Differential Centrifugal Sedimentation method.

3. The separator according to claim 1 or 2 wherein the inorganic particles are zirconium oxide particles.

4. The separator according to any of the preceding claims wherein the porous layer (200) of the separator (1) is provided on a porous support (100).

5. The separator according to any of the preceding claims wherein the separator includes a first porous layer (250) provided on one side of the porous support and a second porous layer (250') provided on the other side of the porous support.

6. The separator according to claim 5 wherein the first porous layer has an overlay thickness (d1) smaller than the overlay thickness of the second porous layer (d2).

7. The separator according to any of the preceding claims further comprising a polymer selected from the group consisting of polysulfone, polyphenylsulfide, polyphenylsulfone and polyether ketone.

8. The method according to any of the preceding claims wherein a thickness of the separator (t2) is from 75 to 550 µm.

9. The separator according to any of the preceding claims wherein the porous support is a fabric selected from a polyphenylene sulphide (PPS) fabric and a polyether ether ketone (PEEK) fabric.

10. The separator according to any of the preceding claims wherein the porous support has a thickness (t1) of 350 µm or less.

11. A method of preparing a separator according to any of the claims 1 to 10 comprising the steps of:
- applying a dope solution comprising a polymer, inorganic particles as defined in claim 1 and a solvent on one or both sides of a porous support (100);
- performing phase inversion on the applied dope solution thereby forming a separator comprising a porous layer (200) on the support.

12. The method of preparing a separator according to claim 11 wherein the solvent is selected from from N-methyl-pyrrolidone (NMP), N-ethyl-pyrrolidone (NEP), N-butyl-pyrrolidone (NBP), N,N-dimethylformamide (DMF), formamide, dimethylsulfoxide (DMSO), N,N-dimethylacetamide (DMAC), acetonitrile, and mixtures thereof.

13. The method of preparing a separator according to claim 11 or 12 wherein the phase inversion step includes a Vapour Induced Phase Separation (VIPS) step and a Liquid Induced Phase Inversion (LIPS) step.

14. An electrolytic cell comprising a separator as defined in any of the claims 1 to 10.

15. Use of the separator as defined in any of the claims 1 to 10 to produce green hydrogen, green ammonia and green steel.
